# EUROPEAN PATENT SPECIFICATION

(11) **EP 1 877 152 B1**
(45) Date of publication and mention of the grant of the patent: **23.09.2009**
(21) Application number: 06737615.2
(22) Date of filing: 10.03.2006
(51) Int. Cl.: B01D 11/00, C10L 1/02, C10G 51/06, B01D 61/00

(54) **FCC PROCESS COMBINING MOLECULAR SEPARATION WITH STAGED CONVERSION**
FCC-VERFAHREN MIT KOMBINATION VON MOLEKÜLTRENNUNG UND GESTUFTER UMWANDLUNG
PROCEDE DE CRAQUAGE CATALYTIQUE FLUIDE COMBINANT SEPARATION MOLECULAIRE ET CONVERSION PAR ETAGES

(30) Priority: 28.03.2005 US 665900 P; 05.04.2005 US 668518 P
(43) Date of publication of application: 16.01.2008
(73) Proprietor: ExxonMobil Research and Engineering Company, Annandale NJ 08801-0900 (US)
(72) Inventor: SWAN, George, A., III, Baton Rouge, LA 70817 (US); COOK, Bruce, R., Stewartsville, NJ 08886 (US); HENRY, B., Erik, Manvel, TX 77578 (US); LOWENTHAL, Steven, S., Flanders, NJ 07836 (US)
(74) Representative: Gerstberger, Gisela
(86) International application number: PCT/US2006/008454
(87) International publication number: WO 2006/104662

(56) References cited:
- US-A- 3 164 542
- US-A- 3 303 123
- US-A- 4 111 791
- US-A- 5 120 900
- US-A- 5 635 055
- US-A- 5 643 442

## Description

### FIELD OF THE INVENTION

This invention relates to fluid catalytic cracking (FCC) process for improving the quality of distillates suitable as blend stocks for diesel fuels. More particularly, an FCC process combines staging the FCC conversion process with interstage molecular separation of multi-ring aromatic species.

### BACKGROUND OF THE INVENTION

Conversion of petroleum feeds to more valuable products is important to petroleum processes such as fluidized catalytic cracking (FCC) and coking. In the FCC process, high molecular weight feeds are contacted with fluidized catalyst particles in the riser reactor of the FCC unit. The contacting between feed and catalyst is controlled according to the type of product desired. In catalytic cracking of the feed, reactor conditions such as temperature and contact time are controlled to maximize the products desired and minimize the formation of less desirable products such as light gases and coke.

Since contacting between catalyst and feed in the FCC reactor is typically in the order of a few seconds, an important factor governing the efficiency of the cracking process is the catalyst. Catalysts for the FCC process are well known and may be either amorphous or crystalline. Catalyst entering the FCC reactor is typically fluidized using steam, hydrocarbon gases generated during the cracking process or some combination thereof. The reaction of catalyst and feed generates large volumes of gaseous hydrocarbons and spent catalyst bearing coke deposits. The gas/solid mixture is passed to separators, typically cyclones, where spent catalyst is separated from gases. Gases are then processed to recover desired hydrocarbons and spent catalyst sent for regeneration.

Because of the short contacting time between feed and catalyst, the condition of the feed is also important. The type of feed injection can have an impact on the product slate produced by the FCC reactor. There are two pathways for the feed to crack into gaseous hydrocarbons, i.e., catalytic and thermal. Thermal cracking in a FCC unit is generally undesirable as this type of cracking can result in the generation of light gases, such as methane, in addition to coke.

Single stage, high conversion FCC units are not well suited to adjusting catalyst formulation and/or conditions to achieve enhanced distillate quality suitable for diesel blend stocks. High bottoms conversion for economic attractiveness also results in growth of 2+ ring aromatics concentrations in the 221/343°C (430/650°F) distillate cut. Depletion of hydrogen content of the distillate is the root cause of its relatively poor cetane number. Reduction in hydrogen content results from cracking of saturates to lighter components, dealkylation of aromatics, and dehydrogenation and aromatization via hydrogen transfer. Previous research has attempted to increase product quality by reducing hydrogen transfer through catalyst and process changes. Additionally, FCC feed hydrotreating has been used in an attempt to both increase conversion to clean products and improve distillate quality. Only marginal improvements in distillate quality have been observed with both catalyst and process changes. Likewise only incremental improvements are observed with FCC feed pretreatment via hydrotreating or acid extraction.

United States Patent Number 5,824,208, Bienstock, et al., describes a catalytic cracking process, which includes a short contact time catalytic cracking step. In this process, a hydrocarbon is initially contacted with cracking catalyst forming a first cracked hydrocarbon product in which less than 50 wt.% of the first cracked product has a boiling point less than or equal to 221°C. A gas oil fraction is then recovered from the first cracked product, and the gas oil fraction is reprocessed by contacting with a cracking catalyst forming a second cracked product

In United States Patent Number 5,635,055, Sweet, et al., the yield and quality of products secured from cracking units is increased by the process of subjecting the product stream secured from such cracking unit to a selective aromatics removal process and recycling the recovered aromatics lean (saturates rich) stream to the cracking unit whereby such saturates rich stream is subjected to increased conversion to higher value desired products.

It would be desirable to improve the FCC process to enhance the quality of FCC-produced distillate suitable as blend stocks for diesel fuels.

### SUMMARY OF THE INVENTION

The invention provides a catalytic cracking process for enhancing the production of distillate suitable as a diesel fuel or blend stock for diesel fuel which comprises:
(a) contacting a hydrocarbon feed with catalyst in a two zone FCC reactor, said reactor comprising a first lower severity zone and a second higher severity zone wherein the higher severity zone has a catalyst/oil ratio that is greater than catalyst/oil ratio in the lower severity zone and said feed comprises a fresh feed and a recycled feed wherein the fresh feed is contacted with catalyst in the first zone and recycled feed is contacted with catalyst in the second zone to form a combined cracked product;
(b) separating the combined cracked product from catalyst;
(c) fractionating the separated cracked product from step (b) into a naphtha fraction, a fraction containing diesel fuel or blend stock for diesel and a bottoms fraction;
(d) passing the fraction from step (c) containing diesel fuel or blend stock for diesel fuel through a first selective low energy molecular separation comprising a membrane or solvent extraction to produce a diesel fuel or blend stock for diesel fuel and a light cycle oil;
(e) passing the bottoms fraction from step (c) through a second selective low energy molecular separation comprising a membrane or solvent extraction to produce a second bottoms fraction and an aromatics lean feed fraction; and
(f) passing the aromatics lean feed fraction from step (e) as recycled feed to the second higher severity zone of step (a).

In one option, suitably the process comprises contacting the hydrocarbon feed with catalyst in the FCC reactor containing a first and second riser, said first riser comprising the low severity zone and said second riser comprising the higher severity zone.

In another option suitably the process which comprises a catalytic cracking process for enhancing the production of distillate suitable as a diesel fuel or blend stock for diesel fuel which comprises:
(a) contacting hydrocarbon feed with catalyst in a riser of a FCC reactor, said riser comprises a lower severity zone and a higher severity zone wherein the higher severity zone has a catalyst/oil ratio that is greater than the catalyst/oil ratio in the low severity zone and said feed comprises a fresh feed and a recycled feed wherein the fresh feed and recycled feed are first contacted with catalyst in the higher severity zone to form a combined cracked product;
(b) separating the combined cracked product from catalyst;
(c) fractionating the separated cracked product from step (b) into a naphtha fraction, a fraction containing diesel fuel or blend stock for diesel and a bottoms fraction;
(d) passing the fraction from step (c) containing diesel fuel or blend stock for diesel fuel through a first selective low energy molecular separation comprising a membrane or solvent extraction to produce a diesel fuel or blend stock for diesel fuel and a light cycle oil;
(e) passing the bottoms fraction from step (c) through a second selective low energy molecular separation comprising a membrane or solvent extraction to produce a second bottoms fraction and an aromatics lean recycled feed fraction; and
(f) combining the fresh feed and the aromatics lean recycled feed fraction; and
(g) contacting the combined fresh feed and the aromatics lean recycled feed fraction with catalyst in step (a).

In a preferred embodiment, the selective low energy molecular separation comprises a membrane.

### BRIEF DESCRIPTION OF THE DRAWINGS

Figure 1a is a schematic drawing showing the single riser embodiment of the invention.

Figure 1b is a schematic drawing showing an expanded view of the feed contact zone.

Figure 2 is a schematic drawing showing the dual riser embodiment of the invention.

### DETAILED DESCRIPTON OF THE INVENTION

A conventional FCC process includes a riser reactor and a regenerator wherein petroleum feed is injected into the reaction zone in the riser containing a bed of fluidized cracking catalyst particles. The catalyst particles typically contain zeolites and may be fresh catalyst particles, catalyst particles from a catalyst regenerator or some combination thereof. Gases that may be inert gases, hydrocarbon vapors, steam or some combination thereof are normally employed as lift gases to assist in fluidizing the hot catalyst particles.

Catalyst particles that have contacted feed produce product vapors and catalyst particles containing strippable hydrocarbons as well as coke. The catalyst exits the reaction zone as spent catalyst particles and is separated from the reactor's effluent in a separation zone. The separation zone for separating spent catalyst particles from reactor effluent may employ separation devices such as cyclones. Spent catalyst particles are stripped of strippable hydrocarbons using a stripping agent such as steam. The stripped catalyst particles are then sent to a regeneration zone in which any remaining hydrocarbons are stripped and coke is removed. In the regeneration zone, coked catalyst particles are contacted with an oxidizing medium, usually air, and coke is oxidized (burned) at high temperatures such as 650 to 760°C. The regenerated catalyst particles are then passed back to the riser reactor.

Suitable hydrocarbon feeds for the catalytic cracking process described herein include natural and synthetic hydrocarbonaceous oils boiling in the range of 221°C (430°F) to 566°C (1050°F), such as gas oil; heavy hydrocarbonaceous oils comprising materials boiling above 566°C (1050°F); heavy and reduced petroleum crude oil; petroleum atmospheric distillation bottoms; petroleum vacuum distillation bottoms; pitch, asphalt, bitumen, other heavy hydrocarbon residues; tar sand oils; shale oil; liquid products derived from coal liquefaction processes, naphtha, and mixtures thereof.

FCC catalysts may be amorphous, e.g., silica-alumina, crystalline, e.g., molecular sieves including zeolites, or mixtures thereof. A preferred catalyst particle comprises: (a) an amorphous, porous solid acid matrix, such as alumina, silica-alumina, silica-magnesia, silica-zirconia, silica- thoria, silica-beryllia, silica-titania, silica-alumina-rare earth and the like; and (b) a zeolite such as faujasite. The matrix can comprise ternary compositions, such as silica-alumina-thoria, silica-alumina-zirconia, magnesia and silica-magnesia-zirconia. The matrix may also be in the form of a cogel. Silica-alumina is particularly preferred for the matrix, and can contain 10 to 40 wt.% alumina. As discussed, promoters can be added.

The catalyst zeolite component includes zeolites which are iso-structural to zeolite Y. These include the ion-exchanged forms such as the rare-earth hydrogen and ultrastable (USY) form. The zeolite may range in crystallite size from 0.1 to 10 microns, preferably from 0.3 to 3 microns. The relative concentrations of zeolite component and matrix on an anhydrous basis may vary widely, with the zeolite content ranging from 1 to 100, preferably 10 to 99, more usually from 10 to 80, percent by weight of the dry composite.

The amount of zeolite component in the catalyst particle will generally range from 1 to 60 wt.%, preferably from 5 to 60 wt.%, and more preferably from 10 to 50 wt.%, based on the total weight of the catalyst. As discussed, the catalyst is typically in the form of a catalyst particle contained in a composite. When in the form of a particle, the catalyst particle size will range from 10 to 300 microns in diameter, with an average particle diameter of 60 microns. The surface area of the matrix material after artificial deactivation in steam will be ≤ 350 m²/g, preferably 50 to 200 m²/g, more preferably from 50 to 100 m²/g. While the surface area of the catalysts will be dependent on such things as type and amount of zeolite and matrix components used, it will usually be less than 500 m²/g, preferably from 50 to 300 m²/g, more preferably from 50 to 250 m²/g, and most preferably from 100 to 250 m²/g.

The cracking catalyst may also include an additive catalyst in the form of a medium pore zeolite having a Constraint Index (which is defined in United States Patent Number 4,016,218, Haag, et al.) of 1 to 12. Suitable medium pore zeolites include ZSM-5, ZSM-11, ZSM-12, ZSM-22, ZSM-23, ZSM-35, ZSM-48, ZSM-57, SH-3 and MCM-22, either alone or in combination. Preferably, the medium pore zeolite is ZSM-5.

FCC process conditions in the reaction zone include temperatures from 482°C to 700°C, hydrocarbon partial pressures from 10 to 40 psia (69 to 276 kPa), preferably from 20 to 35 psia (138 to 241 kPa); and a catalyst to feed (wt/wt) ratio from 3 to 10, where catalyst weight is total weight of the catalyst composite. The total pressure is from atmospheric to 50 psig (446 kPa). Though not required, it is preferred that steam be concurrently introduced with the feedstock into the reaction zone, with the steam comprising up to 50 wt.%, preferably from 1 to 5 wt.% of the primary feed. Also, it is preferred that vapor residence time in the reaction zone be less than 20 seconds, preferably from 0.1 to 20 seconds, and more preferably from 1 to 5 seconds. Preferred conditions are short contact time conditions which include riser outlet temperatures from 482°C to 621°C (900°F to 1150°F), pressures from 0 to 50 psig (101 to 446 kPa) and residence times from 1 to 5 seconds.

In the FCC process of the invention, fresh feed and a recycled feed as described below are contacted with fluidized catalyst, especially regenerated catalyst, in the riser. The riser contains two reaction zones, a low severity zone and a higher severity zone. These zones may be present in a single riser or may be separately located in dual risers, i.e., the low severity zone in a first riser and the higher severity zone in a second riser. For a single riser the conditions of the higher severity zone are typically vapor residence time of 1.0 to 5.0 seconds, catalyst/oil ratio of 4-10 wt/wt, and outlet temperature in the range of 500°C to 571°C (932°F to 1060°F); the lower severity zone operates with catalyst/oil ratio in the range of 3 to 8 wt/wt, with vapor residence time of 0.5 to 5.0 seconds and outlet temperature of 500°C to 571°C (932°F to 1060°F). For dual risers the conditions of the low severity zone are as follows: catalyst/oil ratio = 2 to 5 wt/wt, vapor residence time 0.5 to 2 seconds, and outlet temperature 482°C to 538°C (900°F to 1000°F) and the conditions of the higher severity zone are as follows: catalyst/oil ratio 5 to 10 wt/wt, vapor residence time 1.5 to 5 seconds, and riser top (outlet) temperature 527°C to 571°C (980°F to 1060°F). Furthermore, the catalyst/oil ratio in the higher severity zone is greater than the catalyst/oil ratio in the lower severity zone. Catalyst/oil ratio is the primary driver on severity of conditions (as reflected in conversion to 221°C- products) in the lower and higher severity zones, although residence times may also impact conversion. Longer residence times generally favor greater conversion. The catalyst/oil ratio can be adjusted via flow rates in the respective radially positioned feed nozzles. Thus the number of nozzles, position of nozzles and flow rate through the nozzles can be adjusted to control flow rates which in turn is a way to control severity of conditions in the respective zones.

The mixing of feeds between the higher and lower severity zones in the single riser configuration may be controlled by nozzle orientation, particularly nozzle elevation above the horizontal. Nozzle orientation and design are factors in controlling feed penetration into the catalyst stream. If staged axial injection is employed, the same would be true. The severity of conditions in the higher and lower severity zones may be measured by conversion of feed to the respective zones. Conversion of feed in the higher severity zone to 221°C- (430°F-) product is at least 10% greater than is conversion of feed in the lower severity zone.

The fresh feed may be injected into the first low severity zone in the riser and recycle feed injected to the second higher severity zone. The two zones may be located in a single riser or separately located in dual risers.

In an alternative embodiment, the fresh feed may be combined with the recycle feed and injected into the first higher severity zone in the single riser configuration. Partially cracked feed together with catalyst passes through the lower severity zone to the riser outlet.

In either the single or dual riser case, cracked product from the riser or risers is separated from spent catalyst in cyclones located within the riser reactor. Spent catalyst is stripped, typically with steam, to recover additional product and spent catalyst sent to the regenerator. Cracked product from the cyclones is conducted from the riser reactor to a fractionator.

The fractionator may be any device capable of separating cracked product based on boiling points, e.g., a distillation unit. The fractionator separates cracked product into at least three streams. The first stream is a low boiling stream having a boiling range of from 15°C up to 221°C. This stream is sent for further processing, typically as a fuel such as gasoline. A second stream is separated from the fractionator and has a boiling range up to 400°C, preferably from 221°C to 400°C. This stream includes hydrocarbons suitable as diesel fuel or blend stock for diesel fuel. The second stream is sent to a selective low energy molecular separator comprising a membrane. or solvent extraction. The bottoms stream from the fractionator is sent to a second low energy molecular separator comprising a membrane or solvent extraction.

Membrane separation is a means of separating a mixture of aromatic and saturated hydrocarbons into an aromatics rich permeate and a saturates rich retentate. The saturates rich retentate includes the diesel fraction having a high cetane value. Such membranes and their use under perstaction and pervaporation conditions are known in the art and are described in United States Patent Number 5,643,442, Sweet, et al.. The aromatics rich permeate may be blended into fuel oil or further upgraded by hydrotreating and re-cracking or hydrocracking.

Polyurea/urethane membranes are known for use in the separation of aromatics from non-aromatics. The polyurea/urethane membrane may be prepared from a polyurea/urethane polymer characterized by possessing a urea index of at least 20% but less than 100%, an aromatic carbon content of at least 15 mole percent, a functional group density of at least 10 per 100 grams of polymer, and a C=O/NH ratio of less than 8.0. The polyurea/urethane multi-block copolymer is produced by reacting dihydroxy or polyhydroxy compounds, such as polyethers or polyesters having molecular weights in the range of 500 to 5,000 with aliphatic, alkylaromatic or aromatic diisocyanates to produce a prepolymer which is then chain extended using diamines, polyamines or amino alcohols. The membranes are used to separate aromatics from non-aromatics under perstraction or pervaporation conditions.

Polyurethane imide membranes are another known class of membranes suitable for separation of aromatics from non-aromatics. The polyurethane imide membrane may be prepared from a polyurethane imide copolymer produced by end capping a polyol such as a dihydroxy or polyhydroxy compound (e.g., polyether or polyester) with a di or polyisocyanate to produce a prepolymer which is then chain extended by reaction of said prepolymer with a di or polyanhydride or with a di or polycarboxylic acid to produce a polyurethane/imide. The aromatic/non-aromatic separation using said membrane is preferably conducted under perstraction or pervaporation conditions.

A polyester imide copolymer membrane has been disclosed for use in the separation of aromatics from non-aromatics. The polyester imide copolymers are prepared by reacting polyester diol or polyol with a dianhydride to produce a prepolymer which is then chain extended preferably with a diisocyanate to produce the polyester imide.

Polyester imide membranes are preferred membranes for the separation of aromatic hydrocarbons. Such membranes are produced from a copolymer composition comprising a hard segment of polyimide and a soft segment of an oligomeric aliphatic polyester wherein the polyimide is derived from a dianhydride having between 8 and 20 carbon atoms and a diamine having between 2 and 30 carbon atoms and the oligomeric aliphatic polyester is a polyadipate, a polysuccinate, a polymalonate, a polyoxalate or a polyglutarate.

Membrane separation may be used under perstraction conditions to produce a retentate rich in non-aromatics and alkyl-single ring aromatics and a permeate rich in multi-ring aromatics. The multi-ring aromatics recovered in the permeate are alkyl substituted and alkyl/hetero-atom substituted multi-ring aromatic hydrocarbons having less than 75 mole% aromatic carbon. The multi-ring aromatics are 2-, 3-, 4-ring and fused multi-ring aromatics.

Membrane separation is preferably practiced under pervaporation conditions. The feed is in either the liquid or vapor state. The process relies on vacuum or sweep gas on the permeate side to evaporate or otherwise remove the permeate from the surface of the membrane. The pervaporation process of the present invention can be performed at a temperature of from 150°C to 250°C and higher, preferably 200°C and higher, the maximum temperature being that temperature at which the membrane is physically damaged.

The pervaporation process also generally relies on vacuum on the permeate side to evaporate the permeate from the surface of the membrane and maintain the concentration gradient driving force which drives the separation process. It is known that aromatics flux and selectivity in pervaporation processes are simultaneously increased by application of pressure on the feed side of the separation membrane. An applied pressure of 80 psi (551.6 kPa) and higher has been found effective.

The maximum temperature employed in pervaporation will be that necessary to vaporize the components in the feed which one desires to selectively permeate through the membrane while still being below the temperature at which the membrane is physically damaged. While a vacuum may be pulled on the permeate side operation at atmospheric pressure on the permeate side is also possible and economically preferable. In pervaporation it is important that the permeate evaporate from the downstream side (permeate side) of the membrane. This can be accomplished by either decreasing the permeate pressure (i.e., pulling a vacuum) if the permeate boiling point is higher than the membrane operating temperature or by increasing the membrane operating temperature above the boiling point of the permeate in which case the permeate side of the membrane can be at atmospheric pressure. This second option is possible when one uses a membrane capable of functioning at very high temperature. In some cases if the membrane operating temperature is greater than the boiling point of the permeate the permeate side pressure can be greater than 1 atmosphere. The stream containing the permeate is cooled to condense out the permeated product. Condensation temperature should be below the dew point of the permeate at a given pressure level.

The membranes can be used in any convenient form such as sheets, tubes of hollow fibers. Sheets can be used to fabricate spiral wound modules familiar to those skilled in the art.

Spiral wound elements are known wherein one or more layers of material are used as the feed spacer, said material having an open cross-sectional area of at least 30 to 70% and wherein at least three layers of material are used to produce the permeate spacer characterized in that the outer permeate spacer layers are support layers of a fine mesh material having an open cross-sectional area of 10 to 50%; a coarse layer having an open cross-sectional area of 50 to 90% is interposed between the aforesaid fine outer layers, wherein the fine layers are the layers in interfacial contact with the membrane layers enclosing the permeate spacer. While the permeate spacer comprises at least 3 layers, preferably 5 to 7 layers of alternating fine and coarse materials are used, fine layers always being the outer layers. In a further improvement an additional woven or non-woven chemically and thermally inert sheet may be interposed between the membrane and the multilayer spacers, said sheet being for example a sheet of Nomex 1 to 15 mils thick.

Alternatively, sheets can be used to fabricate a flat stack permeator comprising a multitude of membrane layers alternately separated by feed-retentate spacers and permeate spacers. The layers are glued along their edges to define separate feed-retentate zones and permeate zones.

Tubes can be used in the form of multi-leaf modules wherein each tube is flattened and placed in parallel with other flattened tubes. Internally each tube contains a spacer. Adjacent pairs of flattened tubes are separated by layers of spacer material. The flattened tubes with positioned spacer material is fitted into a pressure resistant housing equipped with fluid entrance and exit means. The ends of the tubes are clamped to create separate interior and exterior zones relative to the tubes in the housing.

Hollow fibers can be employed in bundle arrays potted at either end to form tube sheets and fitted into a pressure vessel thereby isolating the insides of the tubes from the outsides of the tubes. Apparatus of this type are known in the art. A modification of the standard design involves dividing the hollow fiber bundle into separate zones by use of baffles which redirect fluid flow on the tube side of the bundle and prevent fluid channeling and polarization on the tube side.

Preferably the direction of flow in a hollow fiber element will be counter-current rather than co-current or even transverse. Such counter-current flow can be achieved by wrapping the hollow fiber bundle in a spiral wrap of flow-impeding material. This spiral wrap extends from a central mandrel at the center of the bundle and spirals outward to the outer periphery of the bundle. The spiral wrap contains holes along the top and bottom ends whereby fluid entering the bundle for tube side flow at one end is partitioned by passage through the holes and forced to flow parallel to the hollow fiber down the channel created by the spiral wrap. This flow direction is counter-current to the direction of flow inside the hollow fiber. At the bottom of the channels the fluid reemerges from the hollow fiber bundle through the holes at the opposite end of the spiral wrap and is directed out of the module.

Multiple separation elements, be they spiral wound or hollow fiber elements, can be employed either in series or in parallel. For example, the elements may be grouped in parallel with a feed/retentate zone defined by a space enclosed by two tube sheets arranged at the same end of the element. The central mandrels of the elements pass through the feed/retentate zone space defined by the two tube sheets and empty permeate outside the defined space into a permeate collection zone from which it is removed, while the tube sheet directly attached to the element is in open relationship to the interior of the membrane element and retentate accumulates in the space between the top tube sheet and the bottom tube sheet from which it is removed.

Another embodiment for low energy molecular separations involves the use of solvent extraction. The solvent extraction process selectively dissolves the aromatic components in an extract phase while leaving the more paraffinic components in a raffinate phase. Naphthenes are distributed between the extract and raffinate phases. Typical solvents for solvent extraction include phenol, furfural and N-methyl pyrrolidone. Dimethyl sulfoxide (DMSO) and dimethyl formamide (DMF) are preferred solvents for aromatics extraction from fractionator bottoms streams. By controlling the solvent to oil ratio, extraction temperature and method of contacting feed to be extracted with solvent, one can control the degree of separation between the extract and raffinate phases.

As noted above, the bottoms from the fractionator is sent to a second low energy molecular separator. The second separator separates the bottoms fraction into a highly aromatic fraction and an aromatics lean fraction. The aromatics lean fraction is recycled as a feed to the FCC riser. The highly aromatic fraction is suitable as a feed to a coker. The second separator comprises a solvent extraction or a membrane. Suitable membrane materials are described above.

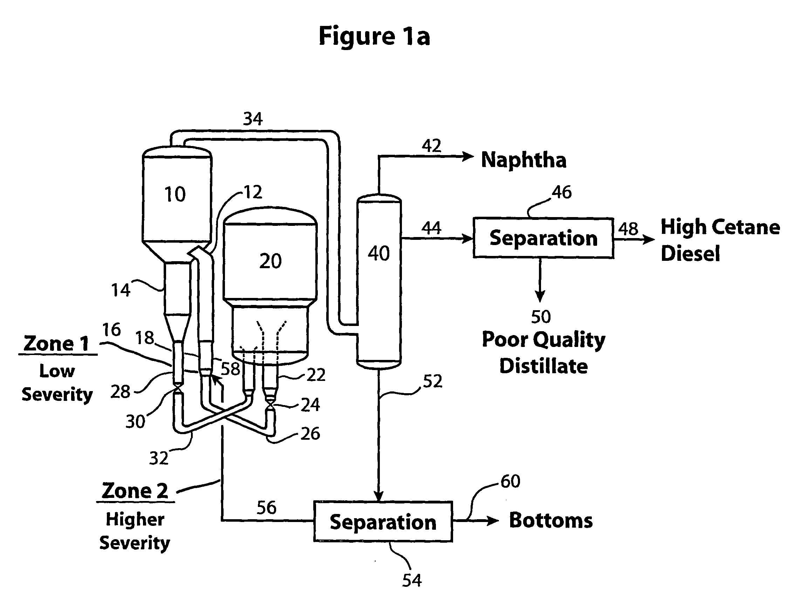

Referring now to Figure 1a, FCC reactor 10 includes a riser 12 and stripper 14. Fresh feed is fed through line 16 to zone 1 designated as 18 of riser 12. Zone 1 is operated at low severity conditions as defined hereinbefore. Fresh feed contacts fluidized hot catalyst from regenerator 20 which is connected to riser 12 through regenerated catalyst standpipe 22, slide valve 24 and J-bend 26. Spent catalyst from riser 12 enters reactor 10 where spent catalyst is separated from product vapors by means of cyclones (not shown). Spent catalyst is then stripped of additional product and returned to regenerator 20 through stripper 14, spent catalyst standpipe 28, slide valve 30 and spent catalyst J-bend 32. Product vapors exit reactor 10 through line 34 and are conducted to fractionator 40 which is a distillation unit. Fractionator 40 separates product from reactor 10 into light fraction that exits fractionator 40 through line 42. This light fraction is typically a naphtha that may be used as a fuel such as gasoline or blended into a fuel. A further cut from fractionator 40 is a distillate in the diesel boiling point range that is conducted to separator 46 through line 44. Separator 46 is a membrane which separates the distillate cut contacting membrane 46 into a paraffins rich diesel or diesel blend stock 48 and an aromatics rich stream 50 suitable for further upgrading by hydrotreating or hydrocracking, or blending into a fuel oil. The bottoms from fractionator 40 is sent through line 52 to a second separator 54 that is a second membrane. Membrane separator 54 separates the fractionator bottoms into a paraffins rich stream and an aromatics rich stream. The paraffins rich stream is sent for recycle through line 56 to zone 2 of riser 12. Zone 2 designated as 58 is at higher severity conditions as defined hereinbefore. Zone 1 and Zone 2 share a common feed injection elevation but with separate, dedicated feed nozzles. The aromatics rich stream exits separator 54 through line 60.

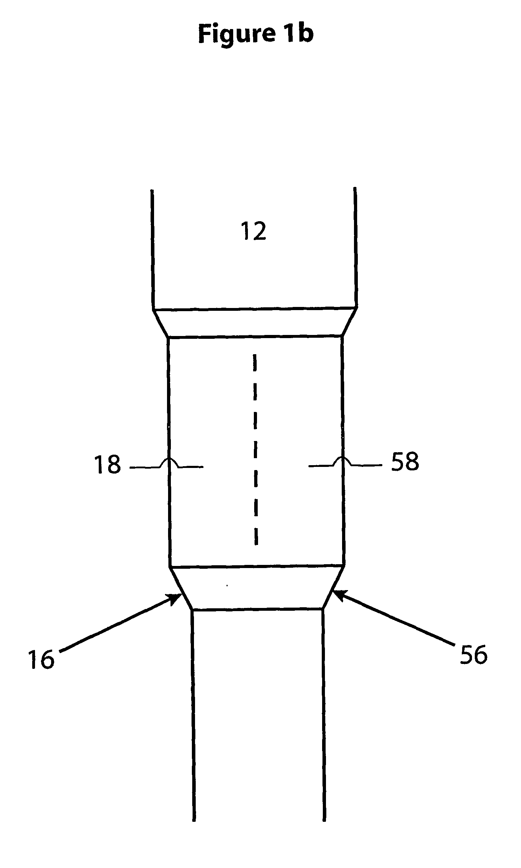

Figure 1b is an expanded view of riser 12 in the vicinity of the feed injection zones. Fresh feed enters the lower section of the riser through line 16 and is injected through one or more injection nozzles (not shown). The thus injected fresh feed enters low severity zone 18 which is one side of the fluidized hot catalyst stream in riser 12. Recycle feed enters the lower section of the riser through line 56 and is injected through one or more injection nozzles (not shown). The thus injected recycle feed enters higher severity zone 58 which is the other side of the hot catalyst stream in riser 12. The dotted line represents the hypothetical middle of the hot catalyst stream.

In an alternative embodiment, the paraffins rich stream from membrane separator 54 of Figure 1 is combined with fresh feed 16 and the combined stream is conducted to riser 12 in a single higher severity zone.

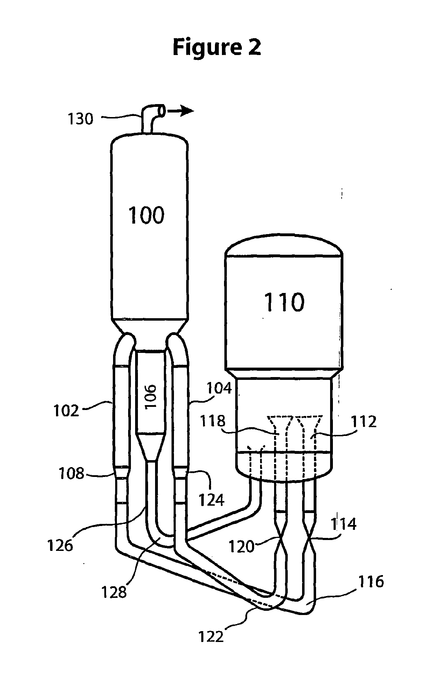

Figure 2 illustrates a dual riser embodiment of the invention. In Figure 2, reactor 100 includes dual risers 102 and 104 and a stripper 106. Fresh feed is fed to riser 102 through line 108. Riser 102 is operated under low severity conditions as defined above. Hot catalyst from regenerator 110 is sent through standpipe 112, slide valve 114 and J-bend 116 to riser 102 where it contacts fresh feed. Hot catalyst from regenerator 110 is sent through standpipe 118, slide valve 120 and J-bend 122 to riser 104. Riser 104 is operated under higher severity conditions as defined above. Recycled aromatics lean feed from a separator is sent to Riser 104 through line 124. Such recycled feed from a separator could be, for example, the aromatics lean fraction separated from separator 54 of Figure 1. Spent catalyst from reactor 100 is separated from product by means of cyclones (not shown) and is conducted to regenerator 110 through stripper 106, spent catalyst standpipe126 and spent catalyst J-bend 128. The slide valve on standpipe 126 is not shown. Product vapors from risers 102 and 104 are separated from spent catalyst and exit reactor 100 through line 130. Product vapors are conducted to a fractionator corresponding to fractionator 40 of Figure 1 where product separation occurs as described for Figure 1.

The invention is further exemplified by the non-limiting example.

### EXAMPLE

With reference to Figure 2, using a computer model, the invention was compared to current operation for a dual riser FCC unit operated at the following conditions: fresh feed (FF) rate of 73 kB/D (453.6 mT/hr), 6.1 (wt/wt) catalyst/oil ratio, vapor residence time of 2.4 seconds, and riser top temperature of 536°C. Conditions were adjusted in the independent risers as follows:

| | Riser 102 (Zone 1) | Riser 104 (Zone 2) |
|---|---|---|
| Feed rate, mT/hr | 453.6 | 166.4 |
| Catalyst/oil ratio (wt/wt) | 3.5 | 8.2 |
| Vapor residence time, sec | 0.7 | 2.6 |
| Riser Top Temperature (°C) | 516 | 545 |

Riser 102 functions as the lower severity zone, while riser 104 functions as the higher severity zone. Combined 343°C+ product from the fractionator was passed through a selective membrane model to achieve a lower aromatics content stream for recycle to riser 104. The combined product yield slate from the process of this invention is compared with the current operation at constant coke yield:

| Wt% FF | Invention | Comparative Base |
|---|---|---|
| C₄- gas products | 14.94 | 17.75 |
| 221°C- naphtha | 46.04 | 45.23 |
| 221/343°C distillate | 19.45 | 14.05 |
| 343°C+ bottoms | 13.93 | 17.30 |
| Coke | 5.64 | 5.67 |

The process of this invention provides higher naphtha and distillate yields, and correspondingly lower bottoms and gas yields. The base operation yielded distillate with Cetane Index of 24. The distillate from this invention is passed through a selective membrane to remove 2+ ring aromatics and provide a stream (11 wt.% FF) with Cetane Index of 44. The remaining low quality distillate (8.4 wt.% FF) with Cetane Index of 17 may be blended into fuel oil.

## Claims

1. A catalytic cracking process for enhancing the production of distillate suitable as a diesel fuel or blend stock for diesel fuel which comprises:
(a) contacting a hydrocarbon feed with catalyst in a two zone FCC reactor, said reactor comprising a first lower severity zone and a second higher severity zone wherein the higher severity zone has a catalyst/oil ratio that is greater than catalyst/oil ratio in the lower severity zone and said feed comprises a fresh feed and a recycled feed wherein the fresh feed is contacted with catalyst in the first zone and recycled feed is contacted with catalyst in the second zone to form a combined cracked product;
(b) separating the combined cracked product from catalyst;
(c) fractionating the separated cracked product from step (b) into a naphtha fraction, a fraction containing diesel fuel or blend stock for diesel and a bottoms fraction;
(d) passing the fraction from step (c) containing diesel fuel or blend stock for diesel fuel through a first selective low energy molecular separation comprising a membrane or solvent extraction to produce a diesel fuel or blend stock for diesel fuel and a light cycle oil;
(e) passing the bottoms fraction from step (c) through a second selective low energy molecular separation comprising a membrane or solvent extraction to produce a second bottoms fraction and an aromatics lean feed fraction; and
(f) passing the aromatics lean feed fraction from step (e) as recycled feed to the second higher severity zone of step (a).

2. Process according to Claim 1 which comprises contacting the hydrocarbon feed with catalyst in the FCC reactor containing a first and second riser, said first riser comprising the low severity zone and said second riser comprising the higher severity zone.

3. A catalytic cracking process for enhancing the production of distillate suitable as a diesel fuel or blend stock for diesel fuel which comprises:
(a) contacting hydrocarbon feed with catalyst in a riser of a FCC reactor, said riser comprises a lower severity zone and a higher severity zone wherein the higher severity zone has a catalyst/oil ratio that is greater than the catalyst/oil ratio in the low severity zone and said feed comprises a fresh feed and a recycled feed wherein the fresh feed and recycled feed are first contacted with catalyst in the higher severity zone to form a combined cracked product;
(b) separating the combined cracked product from catalyst;
(c) fractionating the separated cracked product from step (b) into a naphtha fraction, a fraction containing diesel fuel or blend stock for diesel and a bottoms fraction;
(d) passing the fraction from step (c) containing diesel fuel or blend stock for diesel fuel through a first selective low energy molecular separation comprising a membrane or solvent extraction to produce a diesel fuel or blend stock for diesel fuel and a light cycle oil;
(e) passing the bottoms fraction from step (c) through a second selective low energy molecular separation comprising a membrane or solvent extraction to produce a second bottoms fraction and an aromatics lean recycled feed fraction; and
(f) combining the fresh feed and the aromatics lean recycled feed fraction; and
(g) contacting the combined fresh feed and the aromatics lean recycled feed fraction with catalyst in step (a).

4. Process according to Claim 1 or 3 in which the higher severity zone comprises a vapor residence time of 1.0 to 5.0 seconds, a catalyst/oil ratio of 4 to 10 wt/wt, and an outlet temperature of 500°C to 571°C.

5. Process according to Claim 1 or 3 in which the lower severity zone comprises a catalyst/oil ratio in the range of 3 to 8 wt/wt, a vapor residence times of 0.5 to 5.0 seconds and an outlet temperature of 500°C to 571°C.

6. Process according to Claim 2 in which the low severity zone comprises a catalyst/oil ratio = 2 to 5 wt/wt, a vapor residence time of 0.5 to 2 seconds, and an outlet temperature 482°C to 538°C.

7. Process according to Claim 2 in which the higher severity zone comprises a catalyst/oil ratio of 5 to 10 wt/wt, a vapor residence time 1.5 to 5 seconds, and a riser outlet temperature 527°C to 571°C.

8. Process according to Claim 1 in which a membrane separates feed into an aromatics rich permeate and a saturates rich retentate.

9. Process according to Claim 1 in which a membrane is used comprised of polyurea/urethane, polyurethane imide or polyester imide copolymer.

10. Process according to Claim 1 in which membrane separation is practiced under perstraction or pervaporation conditions.

11. Process according to Claim 1 in which the catalyst/oil ratio is adjusted by feed flow rates.

12. Process according to Claims 1, 2 or 3 in which conversion of feed in the higher severity zone to 221°C- (430°F-) naphtha is at least 10% greater than is conversion of feed in the lower severity zone.

## Patentansprüche

1. Katalytisches Crackverfahren zur Erhöhung der Produktion an Destillat, das als Dieselkraftstoff oder Mischmaterial für Dieselkraftstoff geeignet ist, bei dem
(a) ein Kohlenwasserstoffeinsatzmaterial in einem zweizonigen FCC-Reaktor mit Katalysator in Kontakt gebracht wird, wobei der Reaktor eine erste Zone mit geringerer Schärfe und eine zweite Zone mit höherer Schärfe aufweist, wobei die Zone mit höherer Schärfe ein Katalysator/Öl-Verhältnis hat, das größer als das Katalysator/Öl-Verhältnis in der Zone mit geringerer Schärfe ist, und wobei das Einsatzmaterial ein frisches Einsatzmaterial und ein recycletes Einsatzmaterial enthält, wobei das frische Einsatzmaterial in der ersten Zone mit dem Katalysator in Kontakt gebracht wird und das recyclete Einsatzmaterial in der zweiten Zone mit Katalysator in Kontakt gebracht wird, um ein kombiniertes gecracktes Produkt zu bilden;
(b) das kombinierte gecrackte Produkt von dem Katalysator abgetrennt wird;
(c) das abgetrennte gecrackte Produkt aus Stufe (b) in eine Naphthafraktion, eine Fraktion, die Dieselkraftstoff oder Mischmaterial für Diesel enthält, und eine Sumpfproduktfraktion fraktioniert wird;
(d) die Fraktion aus Stufe (c), die Dieselkraftstoff oder Mischmaterial für Dieselkraftstoff enthält, durch eine erste selektive molekulare Trennung mit niedrigem Energieverbrauch geleitet wird, die eine Membran oder Lösungsmittelextraktion umfasst, um einen Dieselkraftstoff oder ein Mischmaterial für Dieselkraftstoff und ein Leichtöl aus dem Katalysezyklus zu produzieren;
(e) die Sumpfproduktfraktion aus Stufe (c) durch eine zweite selektive molekulare Trennung mit niedrigem Energieverbrauch geleitet wird, die eine Membran oder Lösungsmittelextraktion beinhaltet, um eine zweite Sumpfproduktfraktion und eine aromatenarme Einsatzmaterialfraktion zu erzeugen, und
(f) die aromatenarme Einsatzmaterialfraktion aus Stufe (e) als recycletes Einsatzmaterial in die zweite Zone mit höherer Schärfe von Stufe (a) geleitet wird.

2. Verfahren nach Anspruch 1, bei dem das Kohlenwasserstoffeinsatzmaterial in dem FCC-Reaktor, der ein erstes und ein zweites Steigrohr enthält, mit Katalysator in Kontakt gebracht wird, wobei das erste Steigrohr die Zone mit geringer Schärfe aufweist und das zweite Steigrohr die Zone mit höherer Schärfe aufweist.

3. Katalytisches Crackverfahren zur Erhöhung der Produktion an Destillat, das als Dieselkraftstoff oder Mischmaterial für Dieselkraftstoff geeignet ist, bei dem
(a) ein Kohlenwasserstoffeinsatzmaterial in einem Steigrohr eines FCC-Reaktors mit Katalysator in Kontakt gebracht wird, wobei das Steigrohr eine Zone mit geringerer Schärfe und eine Zone mit höherer Schärfe aufweist, wobei die Zone mit höherer Schärfe ein Katalysator/Öl-Verhältnis hat, das größer als das Katalysator/Öl-Verhältnis in der Zone mit geringer Schärfe ist, und wobei das Einsatzmaterial ein frisches Einsatzmaterial und ein recycletes Einsatzmaterial enthält, wobei das frische Einsatzmaterial und das recyclete Einsatzmaterial zuerst in der Zone mit höherer Schärfe mit Katalysator in Kontakt gebracht werden, um ein kombiniertes gecracktes Produkt zu bilden;
(b) das kombinierte gecrackte Produkt von dem Katalysator abgetrennt wird;
(c) das abgetrennte gecrackte Produkt aus Stufe (b) in eine Naphthafraktion, eine Fraktion, die Dieselkraftstoff oder Mischmaterial für Diesel enthält, und eine Sumpfproduktfraktion fraktioniert wird;
(d) die Fraktion aus Stufe (c), die Dieselkraftstoff oder Mischmaterial für Dieselkraftstoff enthält, durch eine erste selektive molekulare Trennung mit niedrigem Energieverbrauch geleitet wird, die eine Membran oder Lösungsmittelextraktion umfasst, um einen Dieselkraftstoff oder ein Mischmaterial für Dieselkraftstoff und ein Leichtöl aus dem Katalysezyklus zu produzieren;
(e) die Sumpfproduktfraktion aus Stufe (c) durch eine zweite selektive molekulare Trennung mit niedrigem Energieverbrauch geleitet wird, die eine Membran oder Lösungsmittelextraktion beinhaltet, um eine zweite Sumpfproduktfraktion und eine aromatenarme recyclete Einsatzmaterialfraktion zu erzeugen, und
(f) das frische Einsatzmaterial und die aromatenarme recyclete Einsatzmaterialfraktion kombiniert werden, und
(g) die Kombination aus frischem Einsatzmaterial und der aromatenarmen recycleten Einsatzmaterialfraktion in Stufe (a) mit Katalysator in Kontakt gebracht wird.

4. Verfahren nach Anspruch 1 oder 3, bei dem die Zone mit höherer Schärfe eine Dampfverweilzeit von 1,0 bis 5,0 Sekunden, ein Katalysator/Öl-Verhältnis von 4 bis 10 (Gew./Gew.) und eine Auslasstemperatur von 500°C bis 571°C beinhaltet.

5. Verfahren nach Anspruch 1 oder 3, bei dem die Zone mit geringerer Schärfe ein Katalysator/Öl-Verhältnis im Bereich von 3 bis 8 (Gew./Gew.), eine Dampfverweilzeit von 0,5 bis 5,0 Sekunden und eine Auslasstemperatur von 500°C bis 571°C beinhaltet.

6. Verfahren nach Anspruch 2, bei dem die Zone mit geringer Schärfe ein Katalysator/Öl-Verhältnis von 2 bis 5 (Gew./Gew.), eine Dampfverweilzeit von 0,5 bis 2 Sekunden und eine Auslasstemperatur von 482°C bis 538°C beinhaltet.

7. Verfahren nach Anspruch 2, bei dem die Zone mit höherer Schärfe ein Katalysator/Öl-Verhältnis von 5 bis 10 (Gew./Gew.), eine Dampfverweilzeit von 1,5 bis 5 Sekunden und eine Auslasstemperatur am Steigrohr von 527°C bis 571°C beinhaltet.

8. Verfahren nach Anspruch 1, bei dem eine Membran Einsatzmaterial in ein aromatenreiches Permeat und ein an gesättigten Materialien reiches Retentat trennt.

9. Verfahren nach Anspruch 1, bei dem eine Membran verwendet wird, die aus Polyharnstoff/Urethan-, Polyurethan-Imid- oder Polyester-Imid-Copolymer zusammengesetzt ist.

10. Verfahren nach Anspruch 1, bei dem die Membrantrennung unter Perstraktions- oder Pervaporationsbedingungen durchgeführt wird.

11. Verfahren nach Anspruch 1, bei dem das Katalysator/Öl-Verhältnis durch Einsatzmaterialdurchflussraten eingestellt wird.

12. Verfahren nach den Ansprüchen 1, 2 oder 3, bei dem die Umwandlung von Einsatzmaterial in der Zone mit höherer Schärfe zu 221°C- (430°F-) Naphtha mindestens 10 % größer als die Umwandlung von Einsatzmaterial in der Zone mit geringerer Schärfe ist.

## Revendications

1. Procédé de craquage catalytique permettant d'améliorer la production de distillat susceptible d'être utilisé comme carburant diesel ou comme base de mélange pour carburant diesel qui comprend les étapes consistant à :
(a) mettre en contact une charge d'hydrocarbure avec un catalyseur dans un réacteur de craquage catalytique fluide à deux zones, ledit réacteur comprenant une première zone de sévérité plus faible et une deuxième zone de sévérité plus élevée, dans lequel la zone de sévérité plus élevée présente un rapport catalyseur/huile qui est supérieur au rapport catalyseur/huile dans la zone de sévérité plus faible et ladite charge comprend une charge fraîche et une charge recyclée, dans lequel la charge fraîche est mise en contact avec un catalyseur dans la première zone et ladite charge recyclée est mise en contact avec un catalyseur dans la deuxième zone pour former un produit craqué combiné;
(b) séparer le produit craqué combiné du catalyseur ;
(c) fractionner le produit craqué séparé de l'étape (b) en une fraction de naphta, une fraction contenant un carburant diesel ou une base de mélange pour diesel et une fraction de queues ;
(d) envoyer la fraction de l'étape (c) contenant un carburant diesel ou une base de mélange pour carburant diesel à travers une première séparation moléculaire sélective de faible énergie comprenant une extraction par membrane ou par solvant pour produire un carburant diesel ou une base de mélange pour carburant diesel et une huile de cycle légère (LCO) ;
(e) envoyer la fraction de queues de l'étape (c) à travers une deuxième séparation moléculaire sélective de faible énergie comprenant une extraction par membrane ou par solvant pour produire une deuxième fraction de queues et une fraction de charge pauvre en aromatiques ; et
(f) envoyer la fraction de charge pauvre en aromatiques de l'étape (e) en tant que charge recyclée vers la deuxième zone de sévérité plus élevée de l'étape (a) .

2. Procédé selon la revendication 1 qui comprend la mise en contact de la charge d'hydrocarbure avec un catalyseur dans le réacteur de craquage catalytique fluide contenant une première et une deuxième colonne montante, ladite première colonne montante comprenant la zone de faible sévérité et ladite deuxième colonne montante comprenant la zone de sévérité plus élevée.

3. Procédé de craquage catalytique permettant d'améliorer la production de distillat susceptible d'être utilisé comme carburant diesel ou comme base de mélange pour carburant diesel qui comprend les étapes consistant à :
(a) mettre en contact une charge d'hydrocarbure avec un catalyseur dans un colonne montante d'un réacteur de craquage catalytique fluide, ladite colonne montante comprenant une zone de sévérité plus faible et une zone de sévérité plus élevée, dans laquelle ladite zone de sévérité plus élevée présente un rapport catalyseur/huile qui est supérieur au rapport catalyseur/huile dans la zone de faible sévérité et ladite charge comprend une charge fraîche et une charge recyclée, dans laquelle ladite charge fraîche et ladite charge recyclée sont d'abord mises en contact avec un catalyseur dans la zone de sévérité plus élevée pour former un produit craqué combiné ;
(b) séparer le produit craqué combiné du catalyseur ;
(c) fractionner le produit craqué séparé de l'étape (b) en une fraction naphta, une fraction contenant un carburant diesel ou une base de mélange pour diesel et une fraction de queues ;
(d) envoyer la fraction de l'étape (c) contenant un carburant diesel ou une base de mélange pour carburant diesel à travers une première séparation moléculaire sélective de faible énergie comprenant une extraction par membrane ou par solvant pour produire un carburant diesel ou une base de mélange pour carburant diesel et une huile de cycle légère (LCO) ;
(e) envoyer la fraction de queues de l'étape (c) à travers une deuxième séparation moléculaire sélective de faible énergie comprenant une extraction par membrane ou par solvant pour produire une deuxième fraction de queues et une fraction de charge recyclée pauvre en aromatiques ; et
(f) combiner la charge fraîche et la fraction de charge recyclée pauvre en aromatiques ; et (g) mettre en contact la charge fraîche et la fraction de charge recyclée pauvre en aromatiques combinées avec un catalyseur dans l'étape (a) .

4. Procédé selon la revendication 1 ou 3 dans lequel la zone de sévérité plus élevée comprend un temps de séjour sous forme vapeur de 1,0 à 5,0 secondes, un rapport pondéral catalyseur/huile de 4 à 10, et une température à la sortie de 500°C à 571°C.

5. Procédé selon la revendication 1 ou 3 dans lequel la zone de sévérité plus faible comprend un rapport pondéral catalyseur/huile sur la gamme de 3 à 8, un temps de séjour sous forme vapeur de 0,5 à 5,0 secondes et une température à la sortie de 500°C à 571°C.

6. Procédé selon la revendication 2 dans lequel la zone de faible sévérité comprend un rapport pondéral catalyseur/huile = 2 à 5, un temps de séjour sous forme vapeur de 0,5 à 2 secondes, et une température à la sortie 482°C à 538°C.

7. Procédé selon la revendication 2 dans lequel la zone de sévérité plus élevée comprend un rapport pondéral catalyseur/huile de 5 à 10, un temps de séjour sous forme vapeur 1,5 à 5 secondes, et une température à la sortie de la colonne montante de 527°C à 571°C.

8. Procédé selon la revendication 1 dans lequel une membrane sépare la charge en un perméat riche en aromatiques et un rétentat riche en produits saturés.

9. Procédé selon la revendication 1 dans lequel on utilise une membrane constituée de copolymère polyurée/uréthane, polyuréthane imide ou polyester imide.

10. Procédé selon la revendication 1 dans lequel la séparation par membrane est mise en oeuvre dans des conditions de perstraction ou de pervaporation.

11. Procédé selon la revendication 1 dans lequel le rapport catalyseur/huile est ajusté par le biais des débits des charges.

12. Procédé selon les revendications 1, 2 ou 3 dans lequel la conversion de la charge dans la zone de sévérité plus élevée en naphta de 221°C (430°F) est supérieure d'au moins 10% à la conversion de la charge dans la zone de sévérité plus faible.
